(19) Europäisches Patentamt
European Patent Office
Office européen des brevets

(11) Veröffentlichungsnummer : **0 033 140**
**B1**

(12) # EUROPÄISCHE PATENTSCHRIFT

(45) Veröffentlichungstag der Patentschrift : **25.07.84**

(51) Int. Cl.[3] : **C 25 D 13/06,** B 05 D 1/38, C 09 D 3/48, C 09 D 5/08

(21) Anmeldenummer : **81100482.9**

(22) Anmeldetag : **23.01.81**

(54) **Verfahren zur Herstellung einer Oberflächenbeschichtung aus einem härtbaren Mehrkomponentensystem.**

(30) Priorität : **29.01.80 DE 3002982**

(43) Veröffentlichungstag der Anmeldung : **05.08.81 Patentblatt 81/31**

(45) Bekanntmachung des Hinweises auf die Patenterteilung : **25.07.84 Patentblatt 84/30**

(84) Benannte Vertragsstaaten : **BE FR GB IT NL SE**

(56) Entgegenhaltungen :
**EP-A- 0 008 125**
**DE-A- 2 213 862**
**FR-A- 2 334 727**
**GB-A- 1 390 508**

(73) Patentinhaber : **HOECHST AKTIENGESELLSCHAFT**
**Postfach 80 03 20**
**D-6230 Frankfurt am Main 80 (DE)**

(72) Erfinder : **Esser, Klaus**
**Habichtsthalerweg 8**
**D-8752 Heinrichsthal (DE)**
Erfinder : **Dürr, Helmut, Dr.**
**Hansaallee 111**
**D-6000 Frankfurt am Main (DE)**
Erfinder : **Plath, Dieter, Dr.**
**Hildastrasse 32**
**D-6200 Wiesbaden (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 033 140 B1

**Beschreibung**

Man hat versucht, die Autolackierung durch das sogenannte « Reverse »-Verfahren zu rationalisieren. Hierbei wird ein Pulverfüller elektrostatisch auf die Karosserie aufgebracht und unter den für das Füllermaterial geeigneten Bedingungen eingebrannt. Die beim elektrostatischen Auftrag nicht beschichteten und lackierten Teile der Karosserie werden anschließend mit einer Elektrotauch (ET)-Grundierung versehen, indem die gesamte Karosserie eingetaucht wird, so daß danach die gesamte metallische Oberfläche durch einen Lackfilm vor Korrosion geschützt ist. Mit dem Aushärten dieses Elektrotauchlackes wird auch die Vernetzung des Pulverfüllers vervollständigt. Nach Schleifen des Füllers (das Schleifen eines Pulverfüllers bedeutet einen enormen Arbeitsaufwand) wird der Decklack aufgebracht und eingebrannt.

Im Unterschied zum herkömmlichen Verfahren, bei dem normalerweise eine Dreischichten-Lackierung vorgenommen wird, wird somit beim « Reverse »-Verfahren, betrachtet man die gesamte Karosserie, zwar kein Arbeitsgang, aber eine Lackschicht eingespart. Obwohl dieses Verfahren sehr große Vorteile bietet, haben einige gravierende Mängel verhindert, daß das Verfahren im größeren Maßstab in der Automobilindustrie Eingang gefunden hat. Die größten Hindernisse stellen einmal die hohen Investitionskosten für die Pulverbeschichtungsanlage dar, zum anderen der enorme Aufwand, der für das Schleifen getrieben werden muß, um die Oberflächenqualität der derzeitigen Automobillackierung zu erreichen.

Das schwierigste Problem überhaupt stellt aber die Randzone zwischen Pulverfüller und ET-Grundierung dar, da eine Überlappung der Lackschichten nicht erfolgt und hier bevorzugt Korrosion einsetzt. Ein weiterer wesentlicher negativer Faktor ist der hohe Energiebedarf, der bei der Verarbeitung von Pulverlacken erforderlich ist. Darüber hinaus ist es schwierig, dünne und gleichmäßige Schichten zu erzielen. Während der Montage entstandene Beschädigungen sind bei Pulverfüllern nur schwierig auszubessern.

Man hat auch versucht, konventionelle, d. h. lösungsmittelhaltige Einbrennfüller, die im Spritzverfahren aufgetragen werden, auf Basis von Kombinationen von Polyester-, Alkyd- und Epoxyharzen mit Aminharzen wie verätherten Harnstoff- oder Melamin-Formaldehyd-Kondensationsprodukten im « Reverse »-Verfahren zu erproben. Dabei hat sich aber gezeigt, daß das Korrosionsproblem in der Randzone der beiden Lacksysteme nicht befriedigend zu lösen ist. Die vom Füller stammende dünne, mehr, oder weniger zusammenhängende Schicht, gebildet durch « Spritzstaub » in der Randzone, isoliert bei einer nachfolgenden Elektrotauchlackierung so gut, daß an diesen Stellen keine Abscheidung der suspendierten Teilchen erfolgt. Dies bedeutet, daß die Randzone teilweise durch den Spritzstaub des Füllers, dessen Schichtdicke dort im allgemeinen unter 5 µm liegt, nicht ausreichend geschützt wird, so daß dieses Verfahren trotz gewisser Vorteile für die Anwendung in der Praxis nicht geeignet ist.

Es wurde schon ein Verfahren zur Herstellung von Überzügen in zwei Stufen vorgeschlagen, wobei auf ein Substrat 1) als Füller ein lösungsmittelhaltiger Lack aus A) einer hydroxylgruppenhaltigen oligomeren und/oder polymeren Verbindung, B) einem Trimellithsäure enthaltenden Polycarbonsäuregemisch als Vernetzer im Verhältnis der Komponente A) zur Komponente B) von 50 : 50 bis 90 : 10 und weiteren üblichen Zusätzen aufgebracht und bis zur Wasserfestigkeit gehärter wird und anschließend 2) eine weitere Lackschicht durch Elektrotauchlackierung aufgetragen und beide Schichten gehärtet werden. Als Komponente A) sind dort nur Polyester genannt (Nicht vorveröffentlichte europäische Anmeldung 8125).

Die vorliegende Erfindung betrifft nunmehr ein Verfahren zur Herstellung von Überzügen in zwei Stufen, wobei auf ein Substrat 1) als Füller ein lösungsmittelhaltiger Lack aus A) einer hydroxylgruppenhaltigen oligomeren und/oder polymeren Verbindung, B) einem Vernetzer und weiteren üblichen Zusätzen aufgebracht und bis zur Wasserfestigkeit gehärtet wird und anschließend 2) eine weitere Lackschicht durch Elektrotauchlackierung aufgetragen und beide Schichten gehärtet werden, das dadurch gekennzeichnet ist, daß zur Herstellung von Überzügen, in deren Überlappungszone die Schichtdicke wenigstens so stark ist wie die durch Elektrotauchlackierung aufgebrachte Deckschicht, als hydroxylgruppenhaltige oligomere und/oder polymere Verbindungen $A_1$) hydroxylgruppenhaltige Epoxydharze als solche oder in Kombination mit hydroxylgruppenhaltigen Acrylharzen und/oder hydroxylgruppenhaltigen Polyestern oder $A_2$) hydroxylgruppenhaltige Acrylharze in Kombination mit hydroxylgruppenhaltigen Polyestern, als Vernetzer B) des Füllers ein Trimellithsäure enthaltendes Polycarbonsäuregemisch und die Komponenten A) und B) im Verhältnis von 50 : 50 bis 90 : 10 angewendet werden.

Geeignete Acrylharze sind beispielsweise solche, wie sie durch Mischpolymerisation von Alkylestern der Acryl-bzw. Methacrylsäure, deren Alkoholkomponente 1 bis 8 Kohlenstoffatome hat, mit Hydroxyäthyl- bzw. Hydroxypropylestern der Acryl- bzw. Methacrylsäure erhalten werden. Die Alkoholkomponente kann sich beispielsweise von Methyl-, Äthyl-, n- oder iso-Propyl-, n-, sek.-, iso- oder tert.-Butylalkohol, den verschiedenen Pentanolen, Hexanolen, Heptanolen und Octanolen ableiten. Derartige Acrylharze können auch durch Einpolymerisation von üblichen aromatischen Vinylmonomeren, wie Styrol, den verschiedenen Vinyltoluolen und α-Methylstyrol, z. B. in einem Gewichtsanteil bis zu 50 Gew.-% des Gesamtgewichts, modifiziert sein.

Als Acrylharze sind auch Produkte geeignet, wie sie durch Mischpolymerisation von Acryl- bzw.

Methacrylamid mit üblichen Monomeren, z. B. den obengenannten Alkylestern der Acryl- bzw. Methyldrylsäure und aromatischen Vinylmonomeren, z. B. den vorgenannten erhalten werden. Gegebenenfalls können diese Mischpolymerisate auch Hydroxyalkylacrylate bzw.-methacrylate oder Acryl- oder Methacrylsäure in kleineren Mengen, z. B. weniger als 10 %, insbesondere weniger als 5 % enthalten. Die amidgruppenhaltigen Mischpolymerisate sind dann noch mit Aldehyden, insbesondere Formaldehyd, zu alkylolgruppenhaltigen Produkten umgesetzt und in dieser Form für die Arbeitsweise gemäß der vorliegenden Erfindung geeignet.

Geeignete Epoxydharze sind vor allem solche, die durch Umsetzung von mehrwertigen Phenolen, insbesondere Diphenylolalkanen, wie 4,4-Diphenylolmethan und/oder -propan mit Epihalogenhydrinen, insbesondere Epichlorhydrin erhalten werden. In Betracht kommen vor allem die niedrig- und mittelmolekularen Produkte. Diese werden zweckmäßig, ebenso wie höhermolekulare Produkte in geeigneten Lösungsmitteln wie Äthylenglykolmonoäthyl- bzw. -monobutylätheracetat, Butylacetat, Ketonen wie Aceton, Methyläthylketon, Methylisobutylketon, Diisobutylketon und/oder Vinylisobutylketon gelöst. Bei Verwendung von Vinylisobutylketon lassen sich in einzelnen Fällen Spezialeffekte dadurch erzielen, daß die Doppelbindung durch Polymerisationsreaktionen in das System eingebaut wird, was vor allem bei der Kombination von Epoxydharzen mit Polyestern bzw. Acrylharzen von Interesse sein kann.

Trimellithsäurehaltige Polycarbonsäuregemische (Komponente B) sind solche, die Verbindungen der Formeln (I) bis (III) (siehe Formelblatt) enthalten. In den Formeln (I) bis (III) sind

R, R′ und R″ gleich oder verschieden und 2- bis 6-wertige, vorzugsweise 2-wertige gradkettige oder verzweigte Kohlenwasserstoffe mit insgesamt 1 bis 12, vorzugsweise 2 bis 6 C-Atomen, die gegebenenfalls bis zu zwei olefinische Doppelbindungen aufweisen oder durch bis zu drei Ätherbrücken unterbrochen sind,

x und y eine ganze Zahl von 2 bis 6,

t eine ganze Zahl von 1 bis 5 und

z und u Null oder eine ganze Zahl von 1 bis 5,

wobei in den hier nur linear, d. h. für zweiwertige Reste R, R′ und R″ wiedergegebenen Formeln außer bei den Resten R′ und R″ auch bei dem Rest R Verzweigungen vorliegen können. Derartige verzweigte Polycarbonsäuren lassen sich durch eine einzige Formel nicht ohne weiteres darstellen. Wenn aufgrund der möglichen höheren Wertigkeit als 2 von R, R′ und R″ die Verbindungen (I) bis (III) verzweigt sind, können in den verschiedenen Zweigen die Indices x, y und z gleich oder verschieden sein. Verbindungen der Formel (I) sind z. B. mehere Estergruppen aufweisende Ester der Trimellithsäure mit mehrwertigen, biespielsweise 2- bis 6-wertigen gesättigten oder ungesättigten Alkoholen mit 2 bis 12 C-Atomen, einschließlich solchen mit bis zu 3 Äthergruppen. Geeignete Alkohole für die Herstellung dieser Verbindungen sind z. B. die bereits oben genannten Diole, sowie deren höhere Homologe bzw. ihre ungesättigten Analogen, z. B. Butendiole, ferner weitere Oligomere des Äthylenglykols, sowie die oben genannten höherwertigen Alkohole, wobei die Diole bevorzugt sind.

Geeignete Verbindungen der Formeln (I), (II) und (III) sind beispielsweise solche, in denen R, R′ und R″ vorzugsweise zweiwertig sind, aber je nach der Struktur und Wertigkeit des Ausgangsalkohols auch verzweigt sein können. In Formeln (II) und (III) sind R, R′ und R″ gleich oder verschieden und haben die oben für R angegebene Bedeutung.

Typische Reste R, R′ und R″ sind z. B. $-(CH_2)_n-$, worin n = 2 bis 10 ist $-CH_2-\underset{\underset{CH_3}{\|}}{C}H-$, $-CH_2-CH{=}CH-CH_2-$, $-CH_2-CH_2-O-CH_2-CH_2-$, $-CH_2-\underset{|}{C}H-CH_2-$, ferner solche der Formeln (IV) (siehe Formelblatt).

Die Verbindungen der Formel (II) sind also, wenn x = 2 ist, Diestertetracarbonsäuren und, wenn x = 3 ist, Triesterhexacarbonsäuren. Die Verbindungen der Formel (III) stellen beispielsweise oligomere Polycarbonsäuren mit mehreren Estergruppen dar.

Die Verbindungen der Formeln (I) bis (III) lassen sich z. B. durch Hydrolyse eines Anhydridgruppen enthaltenden Gemisches, wie es bei der Umsetzung von Trimellithsäureanhydrid mit den entsprechenden zwei- und/oder höherwertigen Alkoholen in an sich bekannter Weise erhalten wird, herstellen. Dies kann mit oder ohne Lösungsmittel erfolgen. Wird in Gegenwart eines Lösungsmittels hydrolysiert, so kann nach man durch vorsichtiges Abdestillieren, gegebenenfalls unter vermindertem Druck, auch lösungsmittelfreie Polycarbonsäuregemische erhalten. In vielen Fällen ist es aber möglich, ein Lösungsmittelgemisch so zu wählen, daß man für die Weiterverarbeitung geeignete Polycarbonsäurelösungen erhält. Besonders einfach gestaltet sich die Hydrolyse, wenn zu einer Schmelze oder einer Lösung eines Anhydridgemisches bei erhöhter Temperatur die für die Hydrolyse erforderliche Wassermenge zugegeben wird. Zur Vervollständigung der Hydrolyse wird noch einige Zeit bei dieser Temperatur nachgerührt.

Geeignete Lösungsmittel sind beispielsweise die bei den Epoxydharzen genannten oder Mischungen daraus, z. B. aus Äthylenglykolmonobutylätheracetat und Xylol, z. B. im Verhältnis 1 : 1 bis 1 : 3.

Zur Charakterisierung der Anhydridgruppen enthaltenden Gemische eignet sich insbesondere die

Gel-Permeations-Chromatographie (GPC) an mit Divinylbenzol vernetztem Polystyrolgel als Sorptionsmittel und mit Tetrahydrofuran als Elutionsmittel. Mit dieser Methode gelingt es, die Anhydridgemische in ihren Einzelkomponenten genau zu bestimmten, so daß der jeweilige Anteil der einzelnen Komponenten leicht und genau eingestellt werden kann. So lassen sich die Verbindungen der Formeln (I) bis (III) nach ihrer Struktur und Menge genau erfassen.

Zweckmäßig beträgt in der Komponente B) der Gehalt an Verbindungen der Formeln (I) bis (III) 70 bis 99,8, vorzugsweise 80 bis 95 Gew.-% und derjenige an Trimellithsäure 0,1 bis 30, vorzugsweise 5 bis 20 Gew.-%.

Der Gehalt an oligomeren Polycarbonsäuren (Formel (III)) innerhalb des Gemisches der Verbindungen der Formeln (I) bis (III) kann zwischen 0,1 und 99,8, vorzugsweise zwischen 30 und 70 % liegen. Außerdem können die Polycarbonsäurehärter aus Mischungen von Einzelkomponenten mit unterschiedlichen Resten R, R' und R'' und Indices x, y, z, t und u bestehen.

Sehr wichtig ist das Mischungsverhältnis von Komponente A) zur Komponente B), dem Polycarbonsäuregemisch. Ein zu hoher Anteil an Polycarbonsäure führt zu sehr harten und spröden Filmen. Wird die Komponente B) in zu geringen Mengen eingesetzt, ist die Durchhärtung und damit die Filmeigenschaften mangelhaft. Im allgemeinen hat sich ein Festkörperverhältnis der Komponenten A) zu B) von 50 : 50 bis 90 : 10, vorzugsweise 60 : 40 bis 85 : 15, im speziellen jedoch 65 : 35 bis 75 : 25, bewährt.

Die Einbrennbedingungen sowohl bei der Füller-Lackierung als auch bei der ET-Grundierung lassen sich in einem weiten Bereich variieren. Filme mit guten Eigenschaften und hervorragender Überlappung der Grenzzone durch die ET-Grundierung erhält man bei folgenden Einbrennbedingungen : 1 bis 60 Minuten bei Temperaturen von 80 bis 300 °C, vorzugsweise 8 bis 40 Minuten bei 100 bis 170 °C, insbesondere 15 bis 25 Minuten bei 115 bis 140 °C. Durch Variation der Einbrenntemperatur und Zeit läßt sich die Breite der Überlappungszone den technischen Erfordernissen anpassen.

Ein Vorteil bei der Verwendung des erfindungsgemäß eingesetzten Füllers liegt darin, daß er schon unter milden Einbrennbedingungen, z. B. 40 Minuten bei 100 °C bis 8 Minuten bei 150 °C, vorzugsweise 20 Minuten bei 120 °C, einen wasserfesten Film bildet und dadurch die nachfolgende ET-Beschichtung möglich macht.

Die endgültige Vernetzung findet zusammen mit der Aushärtung der ET-Grundierung statt. Dabei resultieren Filme von hervorragender Härte, sehr guter Haftfestigkeit, Schlagfestigkeit und Elastizität. Sehr bemerkenswert ist, daß die guten mechanischen Eigenschaften des Füllers auch beim Überbrennen erhalten bleiben.

Die Breite der Überlappung von ET-Grundierung und Füller beträgt im allgemeinen 2 bis 150 mm und kann durch Variation der Einbrennbedingungen und der Schichtdicke des Füllers den technischen Anforderungen entsprechend gesteuert werden. Ein weiterer Vorteil ist darin zu sehen, daß die Gesamtschichtdicke in der Überlappungszone immer größer ist als die der ET-Grundierung. Sie bildet sich additiv aus der Schichtdicke des an dieser Stelle vorhandenen Füllers und der aufgebrachten Elektrotauchlackierung. Diese größere Schichtdicke ist deshalb besonders wichtig, weil gerade in der Randzone der beiden Lacksysteme verstärkt Korrosion eintreten kann. Wie sich im Salzsprühtest nach SS DIN 50 021 bzw. Salzsprühnebeltest nach DIN 53 167 gezeigt hat, ist die Korrosionsbeständigkeit in der Überlappungszone genau so hervorragend wie in der Fläche der ET-Grundierung bzw. des Füllers. Mithin ist es nach diesem Verfahren möglich, eine Lackschicht einzusparen, ohne eine Verminderung der Korrosionsbeständigkeit des Substrates und der übrigen lacktechnischen Eigenschaften in Kauf nehmen zu müssen. Die Verwendung der Epoxydharze bringt zusätzliche Vorteile mit sich, insbesondere in Bezug auf die chemischen und mechanischen Eigenschaften, wie Verseifungsbeständigkeit, Schlagfestigkeit, Haftfestigkeit und Korrosionsbeständigkeit.

In welcher Form die ET-Grundierung aufgebracht wird, ist für das erfindungsgemäße Verfahren unerheblich. Es können alle heute üblichen ET-Verfahren angewendet werden, z. B. auch anaphoretische Verfahren so wie die Kata- und Autophorese.

Sowohl der Füller als auch die bei der ET-Grundierung eingesetzten Mischungen können auch übliche Zusätze wie Farbstoffe, Pigmente, Füllstoffe, Weichmacher, Stabilisatoren, Netzmittel, Dispergierhilfsmittel, Verlaufmittel und Katalysatoren in den üblichen Mengen enthalten. Diese Substanzen können den Einzelkomponenten und/oder der Gesamtmischung zugesetzt werden.

Als Farbstoffe bzw. Pigmente, die anorganischer oder organischer Natur sein können, werden beispielsweise genannt : Titandioxyd, Graphit, Ruß, Zinkchromat, Strontiumchromat, Bariumchromat, Bleichromat, Bleicyanamid, Bleisilikochromat, Calciummolybdat, Manganphosphat, Zinkoxyd, Cadmiumsulfid, Chromoxyd, Zinksulfid, Nickeltitangelb, Chromtitaugelb, Eisenoxydrot, Eisenoxydschwarz, Ultramarinblau, Phthalocyaninkomplexe, Naptholrot oder dergleichen.

Geeignete Füllstoffe sind z. B. Talkum, Glimmer, Kaolin, Kreide, Quarzmehl, Asbestmehl, Schiefermehl, Bariumsulfat, verschiedene Kieselsäuren, Silikate, Glasfasern, organische Fasern oder dergleichen.

Für die Füller werden die üblichen Lösungsmittel verwendet, beispielsweise aliphatische und aromatische Kohlenwasserstoffe, ein- und mehrwertige Alkohole, Äther, Ester, Glykoläther sowie deren Ester, Ketone, Chlorkohlenwasserstoffe, Terpenderivate, wie Toluol, Xylol, Butanol, Äthyl- und Butylacetat, Äthylenglykolmonoäthyl- oder butyläther sowie deren Acetate, Äthylenglykoldimethyläther, Diathylenglykoldimethyläther, Cyclohexanon, Methyläthylketon, Aceton, Isophoron oder Mischungen davon.

Die Schichtdicken der einzelnen Lacküberzüge betragen bei dem Füller 20 bis 70, vorzugsweise 30 bis 50 µm, während die ET-Grundierung Stärken von 10 bis 40, vorzugsweise 15 bis 25 µm aufweist.

Die in den nachfolgenden Beispielen angeführten Symbole T bedeuten Gewichtsteile und % Gewichtsprozent.

Beispiele

1) Ein handelsübliches hydroxylgruppenhaltiges Epoxydharz auf der Basis von Bisphenol A) und Epichlorhydrin (in 60 %iger Lösung in Äthylenglykolmonoäthyläther, Epoxydäquivalentgewicht 800 bis 1 100, Epoxyd-Wert 0,09 bis 0,12, Erweichungspunkt nach Durrans 90 bis 110 °C) wird mit einem Polycarbonsäuregemisch (60 %ig in Athylglykolacetat (Essigsäureester des Athylenglykolmonoäthyläthers), Säurezahl in Wasser 240, auf Basis von 44,7 Trimellithsäureanhydrid, 9,2 T Propylenglykol, 3,0 T Trimethylolpropan und 2,6 T eines nichtionogenen Netzmittels auf Basis von Nonylpolyglykoläther) in einem Verhältnis von 70 : 30 (berechnet auf Festharz) gemischt. 55,6 T dieser Mischung werden mit 16,7 T Titandioxyd, 16,7 T Bariumsulfat, 0,1 T Gasruß, 0,5 T Kieselsäure und 0,1 T eines Verlaufmittels auf Basis Polyacrylat, sowie 10,4 T eines Lösungsmittelgemisches aus Äthylenglykolmonobutyläther und Äthylglykolacetat (im Verhältnis 60 : 40) zu einem Lack verarbeitet. Durch Zugabe von Butylacetat wird dieser Lack auf eine zum Spritzen geeignete Auslaufzeit (DIN 53 211) von 20 bis 30 Sekunden bei 20 °C verdünnt und auf eine Hälfte eines phosphatierten Stahlbleches so aufgesprüht, daß eine Trockenfilmstärke von 40 µm erzielt wird. Die aufgetragene Schicht wird 17 Minuten bei 130 °C eingebrannt. Anschließend wird das Stahlblech einer Elektrotauch-Grundierung (ET-Grundierung) unter Verwendung eines Lackes folgender Zusammensetzung unterworfen : 75,9 T eines mit einem Polybutadien-Maleinsäure-Addukt plastifizierten Phenolharzes (70 %ig in Glykoläthern), 12,4 T Titandioxyd, 11,5 T Aluminiumsilikat und 0,3 T Gasruß. Diese Mischung wird mit 6,7 T wäßrigem Ammoniak (10 %ig) und 430 T deionisiertem Wasser zu einem Bad mit ca. 14 % Feststoffanteil eingestellt. Die ET-Beschichtung wird bei 25 bis 30 °C und 200 bis 300 Volt in 90 bis 120 Sekunden vorgenommen. Schichtstärke 20 µm. Die aufgetragenen Lackschichten werden 30 Minuten bei 180 °C eingebrannt. Die erzielten Ergebnisse können der nachfolgenden Tabelle entnommen werden.

2) Beispiel 1 wird wiederholt mit dem Unterschied, daß als hydroxylgruppenhaltige Komponente A) ein handelsübliches wärmehärtbares Acrylharz (in 65 %iger Lösung) in einer Fraktion nichtreaktiver aromatischer Kohlenwasserstoffe vom Siedebereich 135 bis 145 °C und n-Butylalkohol im Verhältnis 3 : 1, dynamische Viskosität (50 %ig in Xylol) 750 bis 1 500 mPa.s/20 °C, Säurezahl 20) eingesetzt wird. Das Acrylharz wurde im wesentlichen aus Methylmethacrylat, Butylmethacrylat, Äthylhexylacrylat und Hydroxyäthylmethacrylat hergestellt und hatte eine theoretische OH-Zahl von 82 und eine Säurezahl von 10 bis 15.

Vergleichsbeispiel 1

Beispiel 1 wird wiederholt mit dem Unterschied, daß als Härterkomponente ein mit Methanol veräthertes Melaminharz (75 %ig in Isobutanol, Molverhältnis Melamin zu Formaldehyd = 1 : 6, veräthert mit 4 Mol Methylalkohol, dynamische Viskosität 3 000 bis 9 000 mPa.s/20 °C, Säurezahl < 1) eingesetzt wird.

In einem weiteren Versuch werden noch die Einbrennbedingungen der Füllerbeschichtung auf 17 Minuten bei 90 °C variiert.

Vergleichsbeispiel 2

Zum Vergleich wird auch eine Komposition nach dem Stand der Technik hergestellt, indem Beispiel 1 mit dem Unterschied wiederhold wird, daß als hydroxylgruppenhaltige Harzkomponente eine Mischung eines mittelöligen Ricinenalkydharzes (60 % in Xylol mit einem Gehalt von ca. 37 Gew.-% an Phthalsäureanhydrid, dynamische Viskosität (50 %ig in Xylol) 300 bis 450 mPa.s/20 °C, Säurezahl < 35) und einem Epoxydharz auf Basis Bisphenol A — Epichlorhydrin (75 %ig in Xylol, Epoxyd-Äquivalent 450 bis 525, Erweichungspunkt 65 bis 75 °C, dynamische Viskosität 5 700 bis 14 000 mPa.s/20 °C) und als Härterkomponente ein butyliertes Harnstoff-Formaldehydharz (60 %ig in Isobutanol, Molverhältnis Harnstoff/Formaldehyd = 1 : 2,15, veräthert mit 0,85 Mol Isobutanol, dynamische Viskosität 500 bis 800 mPa.s/20 °C, Säurezahl < 3) eingesetzt wird.

In einem weiteren Versuch werden noch die Einbrennbedingungen bei der Füllerlackierung auf 17 Minuten bei 80 °C variiert.

(Siehe Tabelle Seite 6 f.)

Tabelle

| Beispiel | Harz | Härter | Einbrennbedingungen Füller | Einbrennbedingungen ET-Grundierung | Breite der Überlappungszone Füller/ET-Grundierung/mm |
|---|---|---|---|---|---|
| 1 | E 38,9 T | B 16,7 T | 17'-130°C | 30'-180°C | 5+ |
| 2 | G 38,9 T | B 16,7 T | 17'-130°C | 30'-180°C | 10+ |
| V 1 | E 40,0 T | C 10,0 T | a) 17'-130°C | " | keine |
| | | | b) 17'- 90°C | " | " |
| V 2 | D 44,7 T<br>E 4,6 T | F 5,6 T | a) 17'-130°C | " | " |
| | | | b) 17'- 80°C | " | " |

B Polycarbonsäuregemisch
C Melaminharz
D Ricinenalkydharz
E Epoxydharz
F Harnstoff-Formaldehydharz
G Acrylharz

+ Schichtdicke wenigstens so stark wie die der ET-Grundierung

Formelblatt

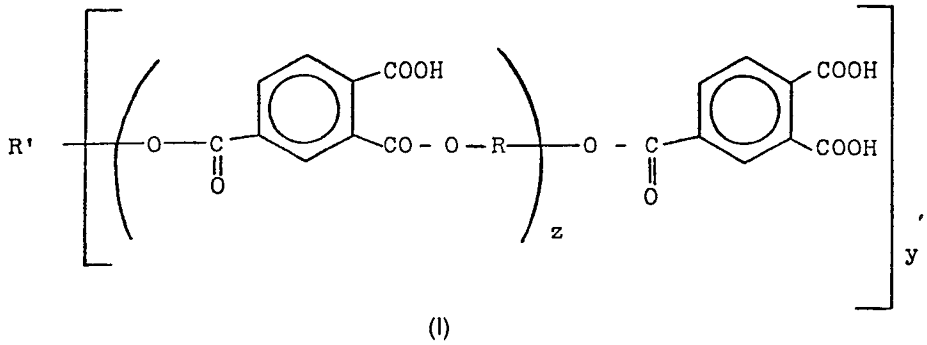

(I)

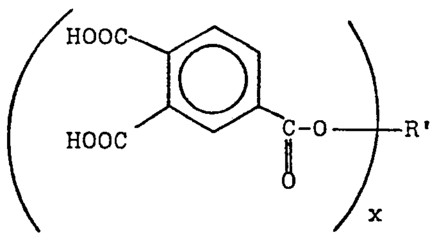

(II)

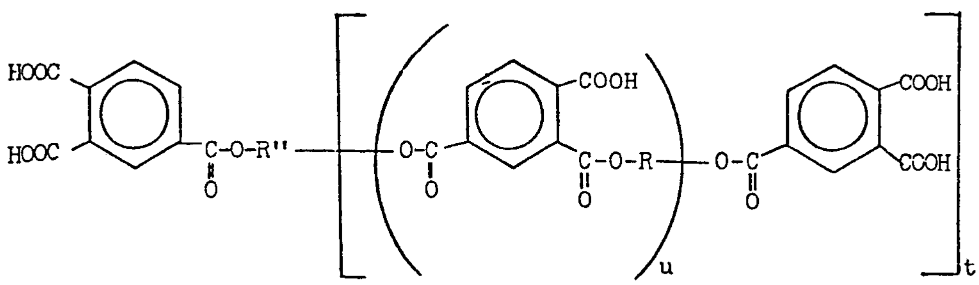

(III)

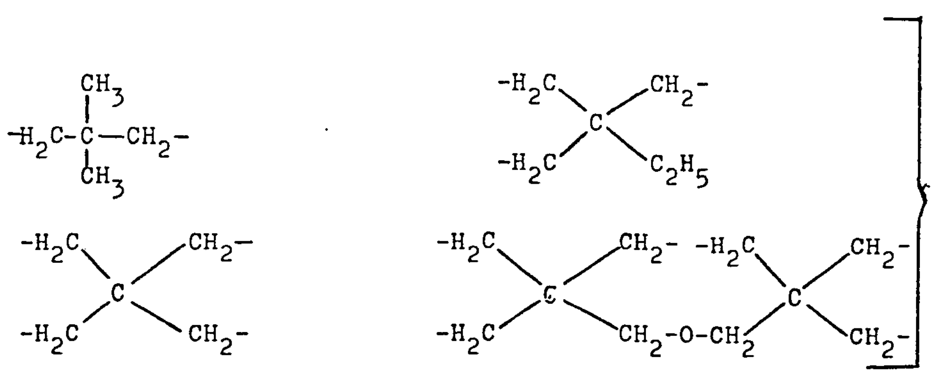

(IV)

**Ansprüche**

1. Verfahren zur Herstellung von Überzügen in zwei Stufen, wobei auf ein Substrat 1) als Füller ein lösungsmittelhaltiger Lack aus A) einer hydroxylgruppenhaltigen oligomeren und/oder polymeren Verbindung, B) einem Vernetzer und weiteren üblichen Zusätzen aufgebracht und bis zur Wasserfestigkeit gehärtet wird und anschließend 2) eine weitere Lackschicht durch Elektrotauchlackierung aufgetragen und beide Schichten gehärtet werden, dadurch gekennzeichnet, daß zur Herstellung

von Überzügen, in deren Überlappungszone die Schichtdicke wenigstens so stark ist wie die durch Elektrotauchlackierung aufgebrachte Deckschicht, als hydroxylgruppenhaltige oligomere und/oder polymere Verbindungen $A_1$) hydroxylgruppenhaltige Epoxydharze als solche oder in Kombination mit hydroxylgruppenhaltigen Acrylharzen und/oder hydroxylgruppenhaltigen Polyestern oder $A_2$) hydroxylgruppenhaltige Acrylharze im Kombination mit hydroxylgruppenhaltigen Polyestern, als Vernetzer B) des Füllers ein Trimellithsäure enthaltendes Polycarbonsäuregemisch und die Komponenten A) und B) im Verhältnis von 50 : 50 bis 90 : 10 angewendet werden.

2. Verfahren nach Anspruch 1, dadurch gekennzeichnet, daß das Verhältnis der Komponente A) zu Komponente B) 60 : 40 bis 85 : 15, vorzugsweise 65 : 35 bis 75 : 25 beträgt.

3. Verfahren nach Anspruch 1 oder 2, dadurch gekennzeichnet, daß die aufgetragenen Schichten während 8 bis 40 Minuten bei 100 bis 170 °C, vorzugsweise 15 bis 25 Minuten bei 115 bis 140 °C eingebrannt werden.

4. Verfahren nach einem oder mehreren der Ansprüche 1 bis 3, dadurch gekennzeichnet, daß ein Überzug hergestellt wird, in dessen Überlappungszone die Schichtdicke der ET-Grundierung 10 bis 40, vorzugsweise 15 bis 25 μm beträgt.

5. Verfahren nach einem oder mehreren der Ansprüche 1 bis 4, dadurch gekennzeichnet, daß ein Überzug hergestellt wird, dessen Überlappungszone zwischen Füller und ET-Grundierung 2 bis 150 mm beträgt.

**Claims**

1. Process for the production of coatings in two stages in which process 1) a solvent-containing lacquer consisting of A) an oligomeric and/or polymeric compound containing hydroxyl groups, B) a crosslinking agent and further conventional additives is applied, as the filler to a substrate and cured until it is water-resistant and subsequently 2) a further lacquer coating is applied by electrodipcoat lacquering and the two coats are cured, characterized in that for the production of coatings in which the layer thickness in the overlap zone is at least as high as the top layer applied by electro-dipcoat lacquering, that as the hydroxy-group containing oligomeric and/or polymeric compounds $A_1$) epoxy resins containing hydroxyl groups are applied per se or in combination with acrylic resins containing hydroxyl groups and/or with polyesters containing hydroxyl groups or $A_2$) acrylic resins containing hydroxyl groups are used in combination with polyesters containing hydroxyl groups, that a polycarboxylic acid mixture containing trimellitic acid is used as the crosslinking agent B) of the filler and that the components A) and B) are applied in a ratio of from 50 : 50 to 90 : 10.

2. Process according to claim 1, characterized in that the ratio of component A) to component B) is 60 : 40 to 85 : 15, preferably 65 : 35 to 75 : 25.

3. Process according to claim 1 or 2, characterized in that the coatings applied are stoved for 8 to 40 minutes at 100 to 170 °C and preferably for 15 to 25 minutes at 115 to 140 °C.

4. Process as claimed in one or more of claims 1 to 3, characterized in that a coating is produced, in the overlap zone of which the layer thickness of the electro-dipcoat primer is 10 to 40, preferably 15 to 25 μm.

5. Process according to one or more of claims 1 to 4, characterized in that a coating is produced, of which the overlapzone between filler and electro-dipcoat primer is 2 to 150 mm.

**Revendications**

1. Procédé pour réaliser des revêtements, en deux étapes, selon lequel (1) on applique sur un subjectile, comme matière de remplissage, une peinture qui contient un solvant et qui est constituée (A) d'un composé oligomère et/ou polymère porteur de radicaux hydroxy, (B) d'un réticulant et d'autres additifs usuels, et on durcit jusqu'à ce que le feuil soit devenu capable de résister à l'eau, après quoi (2) on applique une autre couche de peinture par trempage électrophorétique et on durcit les deux couches, ce procédé étant caractérisé en ce que, pour réaliser des revêtements dans lesquels l'épaisseur de couche dans la zone de chevauchement est au moins égale à celle de la couche de finition appliquée par trempage électrophorétique, on utilise, comme composés oligomères et/ou polymères porteurs de radicaux hydroxy, ($A_1$) des résines époxydiques porteuses de radicaux hydroxy, telles quelles ou associées à des résines acryliques porteuses de radicaux hydroxy et/ou à des polyesters porteurs de radicaux hydroxy, ou ($A_2$) des résines acryliques porteuses de radicaux hydroxy associées à des polyesters porteurs de radicaux hydroxy, et, comme réticulant (B) pour la matière de garnissage, un mélange d'acides polycarboxyliques renfermant de l'acide trimellitique, et on met en jeu les composantes (A) et (B) dans un rapport compris entre 50 : 50 et 90 : 10.

2. Procédé selon la revendication 1, caractérisé en ce que le rapport de la composante (A) à la composante (B) est compris entre 60 : 40 et 85 : 15, de préférence entre 65 : 35 et 75 : 25.

3. Procédé selon l'une des revendications 1 et 2, caractérisé en ce qu'on cuit les couches appliquées pendant une durée de 8 à 40 minutes à une température de 100 à 170 °C, de préférence pendant une durée de 15 à 25 minutes à une température de 115 à 140 °C.

4. Procédé selon l'une quelconque des revendications 1 à 3, caractérisé en ce qu'on produit un revêtement tel que, dans sa zone de chevauchement, l'épaisseur de la couche de fond appliquée par trempage électrophorétique est de 10 à 40 μm, de préférence de 15 à 25 μm.

5. Procédé selon l'une quelconque des revendications 1 à 4, caractérisé en ce qu'on produit un revêtement dans lequel la zone de chevauchement entre la matière de garnissage et la couche de fond appliquée par trempage électrophorétique a une largeur de 2 à 150 mm.